# EUROPEAN PATENT APPLICATION

(11) **EP 2 924 637 A1**
(43) Date of publication of application: **30.09.2015**
(21) Application number: 14305418.7
(22) Date of filing: 24.03.2014
(51) Int. Cl.: G06Q 20/10, G06Q 20/36

(54) **System and method for electronic money transfer of fractional amounts**

(71) Applicant: The Roberto Giori Company Ltd., 1009 Pully (CH)
(72) Inventor: Pinault, Francis, 34990 Juvignac (FR)
(74) Representative: Santarelli

(57) **Abstract**

The present invention concerns a system and method for implementing the manipulation and the transfer of money representing an amount of money that is not a multiple of the smallest face value of banknotes used in the monetary system. Such an amount of money may be divided in an amount being a multiple of the smallest face value of banknotes used in the monetary system and a reminder of a value lower than the smallest face value of banknotes called a fractional amount in the following. It is proposed to manage the fractional amount of money using fraction of banknotes in a clearing mechanism. The data structure representing a banknote may be tagged as fractioned and associated to a counter of value units in the electronic wallet corresponding to the smallest value being manipulated in the system. These value units may be exchanged between two fractioned electronic banknotes.

## Description

The present invention concerns a system and method for electronic money transfer of fractional amount. More particularly, it relates to determining a reliable process for transferring a fractional amount using electronic money representing actual paper banknotes of given face values.

The electronic money is used within a global system as, for instance, the global system described in the patent application published under reference WO 2012/120011 A1 by the applicant. This system is named after inventor Roberto Giori the Global Standard for Money Technology (GSMT). Electronic money is based on electronic banknotes. Electronic banknotes reflect the paper banknotes used in the monetary system. In such a system, an electronic banknote is represented by a unique identification named IEDB standing for Identification of an Electronic/Digital Banknote. This IEDB is included in a digital data named RIEDB standing for reference of IEDB.

This electronic money is carried out by its owner in a digital wallet typically implemented as an application in a portable electronic device such as a mobile phone. The system is supervised and controlled by a centralized entity. This entity maintains a database of all the currency managed by the system. It also maintains a database of references of all the users of the system. The users may be registered users owning a reference in the system. In some embodiments the users may be known only by their mobile phone number registered in the course of a transaction.

As electronic banknotes reflect paper ones, they are provided with the face value of the corresponding paper banknote. It means that money transfer using electronic money are restrained to the transfer of an amount of money being a multiple of the smallest face value of a paper banknote in the monetary system. For example, considering the euro monetary system, the banknote with the smallest face value is the five euros banknote. This means that only amounts multiple of five euros may be manipulated by the electronic money system. This constraint may be considered as rough and technical solutions to be able to manipulate any amount of money from an electronic wallet would be advantageous. This constraint remains valid even in the case where the monetary system handles electronic banknote having a face value different from the face value of paper banknote. Be that as it may, the face value of electronic banknotes in use in the system are predefined and cannot be determined to fit an actual transaction.

The present invention has been devised to address one or more of the foregoing concerns. Its purpose is to propose a solution to implement the manipulation and the transfer of money representing an amount which is not a multiple of the smallest face value of banknotes used in the monetary system. Such an amount of money may be divided in an amount being a multiple of the smallest face value of banknotes used in the monetary system and a reminder of a value lower than the smallest face value of banknotes called a fractional amount in the following. It is proposed to manage the fractional amount using fraction of banknotes in a clearing mechanism. The data structure representing a banknote may be tagged as fractioned and associated to a counter of value units in the electronic wallet corresponding to the smallest value being manipulated in the system. These value units may be compensated between two fractioned electronic banknotes.

According to an aspect of the invention there is provided an electronic wallet for the management of data structures representing electronic banknotes with a face value corresponding to predetermined face values in use in a monetary system, said electronic wallet comprising:
means to tag an electronic banknote as fractioned, meaning that this banknote cannot be exchanged anymore;
a counter of available value units corresponding to the face value of the fractioned banknotes, these value units may then be used in money transfers;
means to return a fractioned banknote to the system as an empty banknote to be assigned to an user when all the value units corresponding to the face value of the banknote have been consumed;
means to restore a fractioned banknote as a plain banknote when said counter of available value units exceeds or equals the face value of said fractioned banknote.

According to an embodiment, the electronic wallet further comprises means to create a container banknote to be used for the transfer of an amount of money lower than the smallest face value of an electronic banknote.

According to an embodiment, the electronic wallet further comprises a counter of value units to assign handling the number of value units already consumed by the electronic wallet.

According to an embodiment, the electronic wallet further comprises a counter of pending value units handling the number of value units already engaged in a transfer of money before said transfer is completed.

According to another aspect of the invention there is provided a method for transferring an amount of money using electronic banknotes, the amount of money being lower than the smallest face value of a banknote in the monetary system, characterized in that it comprises by a mobile device handling an electronic wallet according to any one claim 1 to 4 for the emitter of the transfer:
checking if the number of available value units according to a counter of available units managed by the electronic wallet of the emitter is greater or equal to the amount of money to be transferred, said counter being associated to at least one banknote in the electronic wallet tagged as fractioned;
decrementing the counter of available value units by a number of value units corresponding to the amount of money to be transferred;
sending a container banknote corresponding to the amount of money to a central server managing the electronic money system;
receiving an acknowledgement of the transaction from the central server;
validating the transaction.

According to an embodiment, the method further comprises if the number of available value units according to the counter of available units is lower than the amount of money to be transferred:
if a banknote not tagged as fractioned is available in the electronic wallet:
   tagging said banknote as fractioned;
   incrementing the counter of available units by a number of value units corresponding to the face value of said banknote;
   if a banknote not tagged as fractioned is not available in the electronic wallet:
cancelling the transfer.

According to an embodiment, the method further comprises if no acknowledgement is received:
incrementing the counter of available value units by a number of value units corresponding to the amount of money to be transferred;
cancelling the transfer.

According to an embodiment, the method further comprises after the validation of the transfer:
testing if a complete fractioned banknote has been consumed in different fractional transfers;
if this is the case:
   returning said fractioned banknote to the system as en empty banknote to be assigned.

According to an embodiment, the method further comprises:
validating the transfer comprises incrementing the counter of value units to be assigned by a number of value units corresponding to the amount of money transferred; and
testing if a complete fractioned banknote has been consumed comprises testing if the counter of value units to be assigned has reached the face value of a fractioned banknote; and
returning said fractioned banknote comprises decrementing the counter of value units to be assigned by a number of value units corresponding to the face value of the returned banknote.

According to an aspect of the invention there is provided a method for transferring an amount of money using electronic banknotes, the amount of money being lower than the smallest face value of a banknote in the monetary system, characterized in that it comprises by a mobile device handling an electronic wallet according to any one claim 1 to 4 for the receiver of the transfer:
receiving a container banknote corresponding to the amount of money from a central server managing the electronic money system; and
checking that the electronic wallet contains a fractioned banknote; and
incrementing the counter of available value units by a number of value units corresponding to the amount of money to be transferred; and
validating the transfer.

According to an embodiment, the method further comprises if the electronic wallet does not contain a fractioned banknote:
sending a request to the system for an empty fractioned banknote; and
receiving from the system an empty fractioned banknote assigned to the user of the electronic wallet.

According to an embodiment, the method further comprises:
testing if the counter of available units reaches the face value of a fractioned banknote;
restoring the fractioned banknote as a plain banknote in the electronic wallet.

According to an aspect of the invention there is provided a computer program product for a programmable apparatus, the computer program product comprising a sequence of instructions for implementing a method according to the invention, when loaded into and executed by the programmable apparatus.

According to an aspect of the invention there is provided a computer-readable storage medium storing instructions of a computer program for implementing a method according to the invention.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system". Furthermore, the present invention may take the form of a computer program product embodied in any tangible medium of expression having computer usable program code embodied in the medium.

Since the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

Embodiments of the invention will now be described, by way of example only, and with reference to the following drawings in which:
Figure 1 illustrates the general architecture of the elements in the system involved in an electronic money transfer;
Figure 2 illustrates the structure of a record representing an electronic banknote according to an embodiment of the invention;
Figure 3 illustrates the structure of a record representing a transaction according to an embodiment of the invention;
Figure 4 illustrates the data exchanges occurring in an electronic money transfer according to an embodiment of the invention;
Figure 5 illustrates the data structure of a banknote that may be fractioned in an embodiment of the invention;
Figure 6 illustrates the different states that may be taken by an electronic banknote in an embodiment of the invention;
Figure 7 illustrates the steps undertaken by an emitter of a fractional transfer in an embodiment of the invention;
Figure 8 illustrates the steps undertaken by a receiver of a fractional transfer in an embodiment of the invention;
Figure 9 illustrates the schematic block diagram of a computing device for implementation of one or more embodiments of the invention.

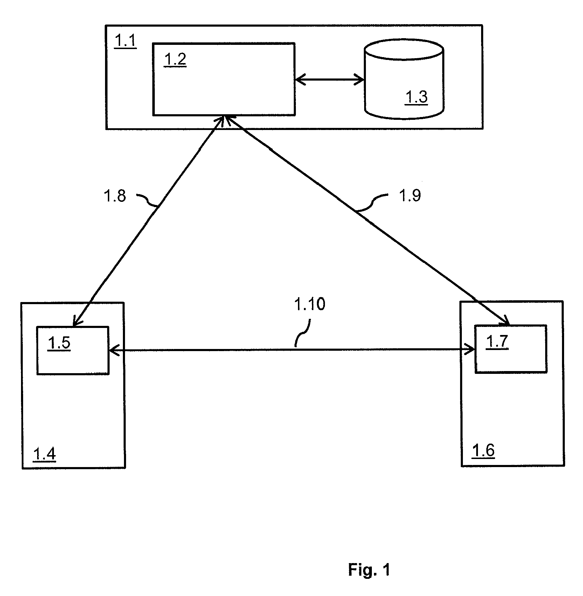

Figure 1 illustrates the general architecture of the elements in the system involved in an electronic money transfer. The system comprises a central server 1.1, typically a GSMT server. This server may be physically implemented with a plurality of physical servers that may or not be located in a single place. Logically, it is constituted by a database that stores and handles different data stores. A first store registers all the electronic banknotes managed by the system. A second store registers the users of the system. These users may be registered users with a unique identity in the system. In some embodiment of the invention, some users may only be known by their phone number. Actually, this allows the system to be largely used by people without needing to create an account. The formalities to get a mobile phone subscription will replace a regular registration in the system.

A front end 1.2 is implementing the different functionalities made available to the users. It gathers the registration of a unique identity of users, the management of this unique identity and the management of the transfer of electronic money involved during a transaction between two users.

A first user owns a first mobile device 1.4 holding a virtual wallet 1.5. Similarly, a second user owns a second mobile device 1.6 handling a second virtual wallet 1.7. It should be understood that these mobile device may be of any kind as long as they got a user interface to interact with the user, memory storage to store the data representing the virtual wallet and communication means to communicate, references 1.8 and 1.9, with the front end 1.2. These communication means are typically using the data communication abilities of the device used for the connection to a data network as Internet. Advantageously, but not necessarily they may also include communication means to communicate directly, reference 1.10, with each other. These direct means of communication may use wireless communication as Bluetooth, WiFi, NFC (standing for Near Field Communication) or others. All these technologies allow establishing a direct communication between two devices in the vicinity of each other and exchanging some data. Typically, the mobile device is a mobile phone, preferably of the smartphone category.

A typical electronic money transfer involves the following operations. Assuming the first user is the emitter, a request for the transfer is submitted from the virtual wallet 1.5 to the front end 1.2. This request includes the identity in the system of the emitter. This identity may be constituted by the GSMT unique identifier of the user or by its phone number depending on the embodiment of the invention. The request also includes the identifier of the electronic banknote to be transferred and the identity of the recipient. This identity may be entered in the mobile device 1.4 by the emitter or advantageously it may be communicated by the second mobile device 1.6 using direct communication means 1.10 or obtained by any other means by the mobile device. Advantageously it also includes the face value of the banknote to be transferred, the time of the transaction request and the location of the emitter at that time.

When received by the frontend server 1.2, the request is checked to determine its validity. Typically, the identity of the emitter is checked with its right to carry out such a transfer. The identity of the recipient is also checked. It is also checked to whether the electronic banknote is registered to actually belong to the emitter. The procedure may include other checks not described here. Next, if all these checks succeed, the frontend 1.2 send a request for approval of the transfer to the recipient, namely the second user. This request is sent to the second mobile device using the communication means 1.9. The second user or the automatic procedure in his device has to approve the transaction. An acknowledgment is then sent from the second mobile device to the frontend 1.2. The frontend validates the transaction and acknowledges it to both users. The electronic money is no longer available in the virtual wallet of the first user while being present in the virtual wallet of the second user. At the server level, the electronic banknote is registered as belonging to the second user.

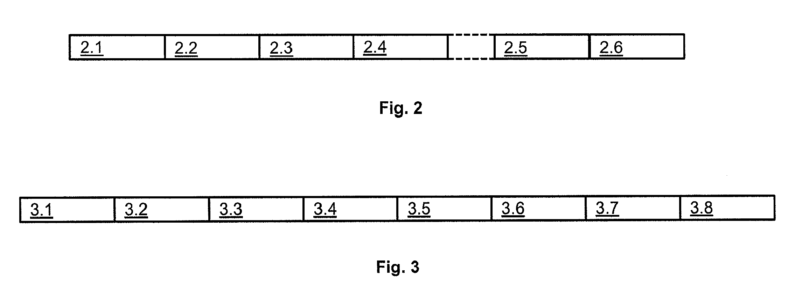

Figure 2 illustrates an example of the structure of a record representing an electronic banknote in a system as GSMT. The first field 2.1 is the length of the data record in byte. Alternatively, this field may contain the length of the data record and the number of transactions stored within. The second field 2.2 is the IEDB itself, meaning the identifier of the electronic banknote. Advantageously, the third field 2.3 is the face value of the electronic banknote. Next, the data record includes the fields registering the transactions from field 2.4 to field 2.5 which number is variable. The structure of the transaction field will be detailed below in relation with Figure 3. Advantageously, a last field 2.6 is there to insure the consistency of the record. This may be a checksum as, for instance, a CRC (Cyclic Redundancy Check). Preferably this field consists in a digital signature of the record by the server using asynchronous cryptography signature algorithm. Accordingly the record may be checked for its authenticity and its integrity.

Figure 3 illustrates an example of the structure of a record representing a transaction in a system like GSMT. According to this embodiment, the first field 3.1 of the record is the identifier of the banknote, namely the IEDB. The second field 3.2 of the record is face value of the banknote. The field 3.3 is the emitter identifier. This identifier may be the GSMT user identifier of the emitter or alternatively his phone number. Next, the field 3.4 of the record is the identifier of the recipient of the transfer. Advantageously, the record may include the date 3.5 of the transaction with the time 3.6. It may also include the location 3.7. The location may be obtained automatically by virtue of geolocation means included in the mobile device. Today, most of the smartphone on the market include some geolocation means based on the Global Positioning System or GPS. These geolocation means may also be based on GSM base station triangulation or databases containing the location of WiFi access points. Advantageously, a last field 3.8 is there to insure the consistency of the record. This may be a checksum as, for instance, a CRC (Cyclic Redundancy Check). Preferably this field consists in a digital signature of the record by the server using asynchronous cryptography signature algorithm. Accordingly the record may be checked for its authenticity and its integrity.

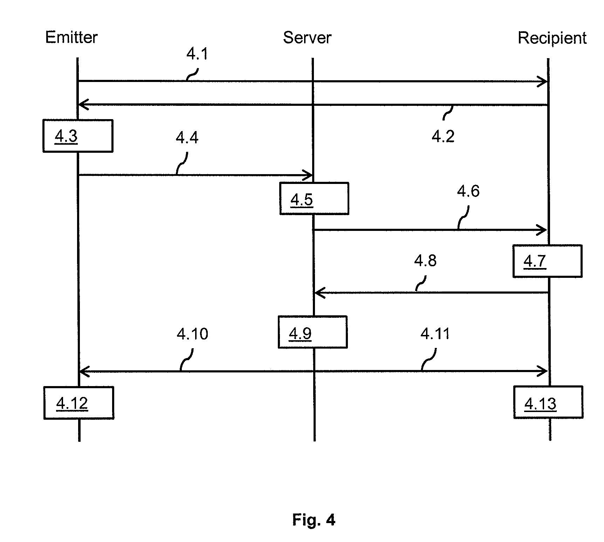

Figure 4 illustrates an example of the data exchanges occurring in an electronic money transfer according to an embodiment of the invention. The main steps involved in a method to carry out an electronic banknote transfer will now be described. The money transfer involves an emitter who is the owner of the electronic banknote and a recipient who is the recipient of the transfer. The server represents the authority managing the electronic money. Both the emitter and the recipient should have a virtual wallet typically operated by a mobile device such as a smartphone. The electronic banknote subject of the transfer belongs initially to the emitter and is managed in his virtual wallet on his mobile device. The emitter as an owner of electronic money is known from the authority managing this electronic money. He owns a unique identity on the server and is identified by a so called GSMT identifier. In some embodiment, this identifier may be his mobile phone number. Typically, the recipient is also known by the authority and also owns a unique identity on the server. In some embodiments, the recipient may be new to the authority. In the latter case, a unique identity will be created on the server in the process of the transfer. This unique identity will then be typically linked to the mobile phone number of the recipient. This unique identity may be automatically created for example based on the mobile phone subscription of the recipient using his phone number.

In a first step, the emitter needs to know about the recipient identifier, this identifier being a GSMT identifier or the phone number. This identifier may be communicated by the recipient to the emitter and entered in the virtual wallet by the latter. Advantageously, the emitter and the recipient establish a direct connection between their devices. This direct connection may be established based on Bluetooth, WiFi or NFC technologies. It may also be established over Internet using the data capabilities of the smartphones. Once the connection is established, the emitter virtual wallet sends a request 4.1 to the receiver virtual wallet to request the recipient identifier. The recipient's virtual wallet replies to this request with the message 4.2 containing the requested identifier.

During step 4.3, the virtual wallet of the emitter generates a request 4.4 to be sent to the server of the authority for the transfer. Advantageously this request includes the identifier of the emitter, the identifier of the receiver and the data record representing the electronic banknote to be transferred. This data record is typically the data record described in relation to Figure 2.

During step 4.5, the server is first making some checks on the received request to validate the request. A first check is made on the identity of the emitter. For instance, it is verified if this user is known and is not subject to any restriction. The receiver is also checked for the same. In some embodiments, if the user is not already registered in the system, his unique identity is created at this moment. Next the data record representing the electronic banknote is validated. By virtue of the history of transactions embedded in the data record representing the electronic banknote, it is possible to check the coherency of the transaction chain. Therefore it is possible to check that the current owner is coherent with all the past transaction related to this banknote. This verification may be carried out without needing to access the database. This is a great advantage considering that the system is supposed to handle a great amount of users and transaction and that the response of the server needs to be made as fast as possible to allow a real time. By embedding the history of transactions right into the data record representing the electronic banknote, the desirable verifications may be conducted easily and rapidly saving the need to access in real time the huge central database to consolidate the chain of transactions in order to determine if the emitter is the actual owner of the banknote. Next, the record of the outstanding transaction is generated and integrated in the data record representing the electronic banknote. Its storage stands by waiting to the validation by the recipient.

Next, a request for validation 4.6 is sent to the recipient. Advantageously, this request includes the identifier of the emitter and the data record representing the electronic banknote including the outstanding transaction. During step 4.7, the transaction is presented to the recipient for validation. Once the transaction has been validated by the recipient or automatically by a procedure in the device of the recipient an acknowledgment 4.8 is sent back to the server. According to a particular embodiment of the invention, the recipient's virtual wallet may be adapted to carry out a validity check on the data record representing the electronic banknote. By virtue of the presence of the embedded history of transactions within the data record, a check of the transaction chain may be made by the wallet of the recipient. This allows the recipient to validate on his own the electronic money which is proposed to him without the need to access the central server.

During step 4.9, the server checks the received data record representing the electronic banknote and checks it for coherency and validity. The outstanding transaction is then validated and stored in the database. Acknowledgments 4.10 and 4.11 are sent to both the emitter and the receiver to validate the transaction. The virtual wallets of the emitter and the recipient are updated accordingly in step 4.12 respectively 4.13. The transferred banknote is removed from the virtual wallet of the emitter and added to the virtual wallet of the recipient.

It is worth noting that electronic banknotes are the exact counterpart of "real" paper banknotes. They may be created digitizing some paper banknotes that are then destroyed or directly emitted by a suited authority like a central bank. As such, they participate to the monetary system like paper banknotes and are managed by said authority the same way. They are provided with a face value and a serial number in the same manner as paper banknotes. In particular, the face value of a paper banknote is attributed when it is created and it should correspond to one of the face values in use in the monetary system. It is not possible to alter the face value of a created electronic banknote in any way for obvious reasons of security. Taking into account these constraints, finding a technical solution to implement manipulation, and especially the transfer, of any amount of money from an electronic wallet is not an easy task. In the real world, this problem is handled by coins. A physical exchange of money may use paper banknote for the core and adjust the amount with coins. But implementing electronic coins may introduce some weaknesses in the system, as coins are not provided with a serial number as banknotes. The control of their proliferation may be challenging.

The proposed solution is based on the implementation of a fractioned electronic banknote. The data structure representing the electronic banknote is provided with a flag to specify that the electronic banknote is fractioned. The electronic wallet is provided with some counter to associate a number of value units to a fractioned electronic banknote. The value unit represents the smallest value possibly manipulated by the monetary system or a multiple of the smallest value. For example, in the Euro monetary system, today the smallest paper banknote is 5 euros, the value unit would be the cent. It is possible also to use one euro as value unit. The counter in the electronic wallet is keeping the number of available value units available for a payment. When a new banknote is set to fractioned, the number of available value units is incremented by a number of value units corresponding to the face value of the banknote. When a payment is being done, the number of value units is decremented of the corresponding amount. When a number of value units corresponding to the face value of a fractioned banknote has been spent, it means that a fractioned banknote has been emptied or consumed. The fractioned banknote does not correspond anymore to an amount of money belonging to the user. The empty banknote is given back to the system. On the contrary, when the number of available value units becomes greater than the face value of a fractioned banknote, this banknote could go back to a plain banknote status. The number of available value units is then decremented of the face value of the banknote becoming plain.

When a user is to receive a payment with a fractional amount, he must have a fractioned banknote to be used as a recipient of the fractioned amount. If not, the user requests one to the system. The system allocates an empty banknote to the receiver. The empty banknote is made fractioned. The counter of available value units may then be incremented of the amount received. The counter is then associated to the received banknote.

The electronic wallet according to an embodiment of the invention is provided with means to tag an electronic banknote as fractioned, meaning that this banknote cannot be exchanged anymore. It is also provided with a counter of available value units corresponding to the face value of the fractioned banknotes, these value units may then be used in money transfers. It is also provided with means to return a fractioned banknote to the system as an empty banknote to be assigned to an user when all the value units corresponding to the face value of the banknote have been consumed. It is also provided with means to restore a fractioned banknote as a plain banknote when said counter of available value units exceeds the face value of said fractioned banknote.

A dedicated data structure representing a container banknote is used as a vehicle for the transfer of fractional amount between a user and the GSMT system. This container banknote is personal in the meaning that it is attached to the user, either emitter of receiver of the fractional amount. A container banknote is never transferred from a user to another user.

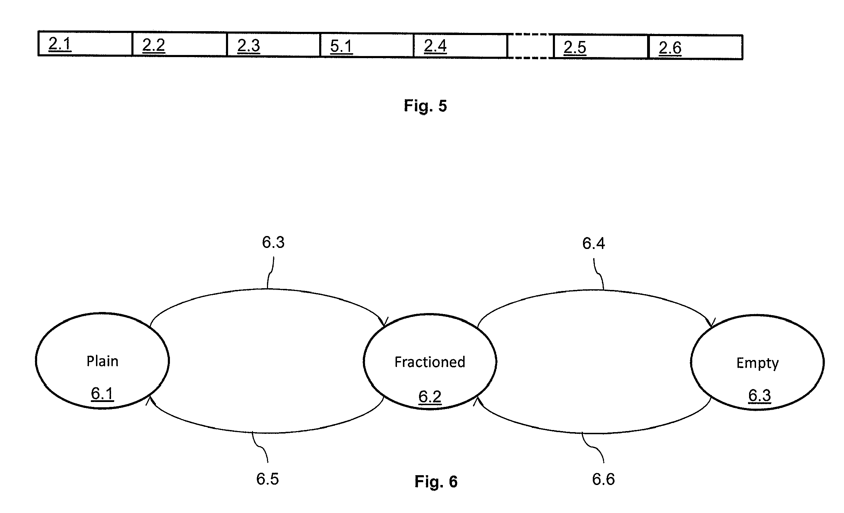

Figure 5 illustrates the data structure of a banknote that may be fractioned in an embodiment of the invention. This data structure corresponds to the one illustrated on Figure 2, with the addition of the flag 5.1 used to signal if the banknote is fractioned. While all electronic banknotes may be fractioned, in a preferred embodiment, only the banknote with the smallest face value may be fractioned. A user needing to transfer an amount of money which does not correspond to a multiple of this smallest face value and who do not own an electronic banknote of this smallest face value has to operate a change operation prior to the transfer in order to get one. This change operation is not described in this document.

Figure 6 illustrates the different states that may be taken by an electronic banknote in an embodiment of the invention.

In state 6.1, the banknote is plain, meaning that it can be used in the GSMT system as any banknote. It may be owned, transferred, exchanged as a whole. When a user needs to manipulate, typically to transfer, a fractional amount of money, the plain banknote is set to fractioned in operation 6.3, it goes to the fractioned state 6.2. This state is typically materialized by setting the flag 5.1 to fractioned in the data structure of the banknote illustrated on Figure 5. The counter of value units in the electronic wallet hosting the electronic banknote is incremented by a number of value units corresponding to the face value of the banknote. These value units are available to be used in the transfer of the fractional amount of money.

When all the value units corresponding to the fractioned banknote have been used, by action 6.4, the banknote takes the state empty 6.3. When in this state, the banknote does not belong anymore to the user. It is typically returned to the GSMT system constituting an empty banknote to be assigned to a user. An empty banknote is typically assigned to a user that is the receiver of a fractional amount of money and who do not already own a fractioned banknote. The assignation action 6.6 gets the state fractioned 6.2 in the electronic wallet of its new owner. As it is empty, the corresponding counter of available value units is not affected by the assignation. It will only be affected by the transfer of a fractional amount of money being the origin of the assignation.

When the number of value units becomes greater than the face value of the fractioned banknote, the latter is reconstituted as a plain banknote 6.1 by the action 6.5. The number of available value units is then decremented by a number corresponding to the face value of the reconstituted plain banknote.

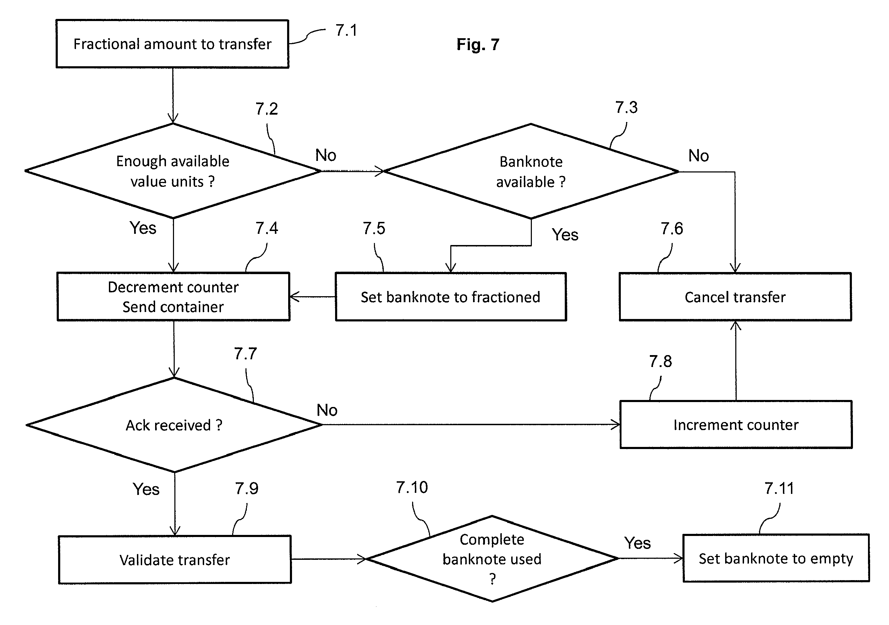

Figure 7 illustrates the steps undertaken by an emitter of a fractional transfer in an embodiment of the invention.

When a user of an electronic wallet wants to transfer an amount of money which does not correspond to a multiple of the smallest face value of a banknote in the monetary system, the amount is separated in two parts. This may be done by an integer division of the amount by the smallest face value. The quotient corresponds to an amount of money which may be transferred using only the transfer of plain banknotes. The reminder or fractional amount, lower than the smallest face value, is still to transfer, corresponding to step 7.1.

In a step 7.2 it is checked if the number of available value units according to the counter managed by the electronic wallet of the user is greater or equal to the fractional amount to be transferred.

If this is the case, it means that at least a fractioned banknote is in use in the electronic wallet corresponding to an available value great enough to handle the fractional transfer. In a step 7.4, the counter of available value unit is then decremented by a number of value units corresponding to the fractional amount. Advantageously, but not necessarily, a counter of pending value unit is incremented by the corresponding number of value units until the validation of the transfer. A container banknote is then prepared corresponding to the fractional amount and sent to the GSMT system in the same way as a plain banknote for a regular transfer.

Next, in a step 7.7, the electronic wallet is waiting for receiving the validation of the transfer from the GSMT system. If the acknowledge is received, meaning that the transfer has been completed between the GSMT system and the receiver, the transfer is validated in the step 7.9. If no acknowledge is received, or a notification indicating that the transfer could not have been completed, then the transfer should be cancelled. In a step 7.8, the counter of available value units is incremented back by the number of value units corresponding to the amount of the transfer. If a counter of pending value unit is used, the latter is decremented by the same number. The transfer is then actually cancelled in step 7.6

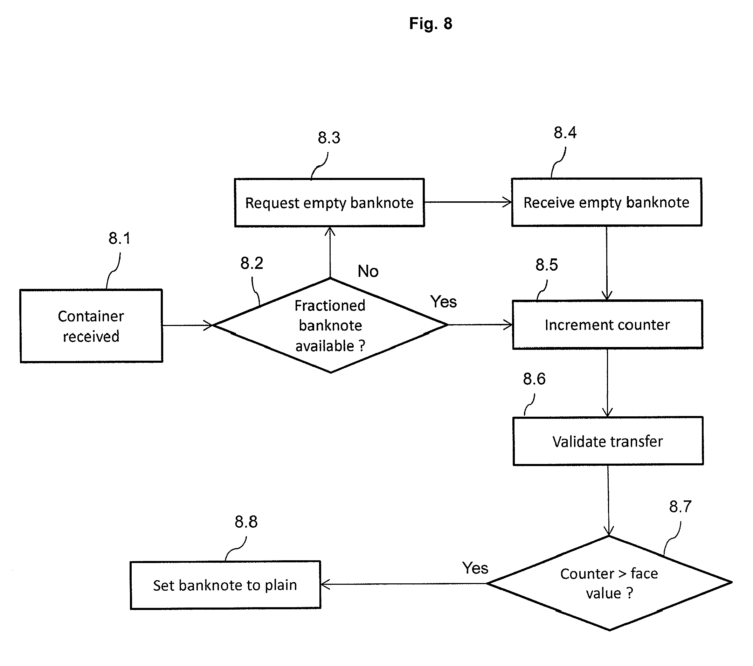

After the transfer has been validated in step 7.9, it is tested, in a step 7.10, if a complete fractioned banknote has been consumed in different fractional transfers. Indeed, when a banknote is made fractioned, a number of value units corresponding to its face value are made available for fractional transfers. When the total of these value units have been consumed in fractional transfers, the fractioned banknote should be removed from the electronic wallet. Actually, the banknote is tagged as empty and returned to the GSMT system as an empty banknote not belonging to any user. Such an unassigned empty banknote is available to be re-assigned to a new user, typically a receiver of a fractional transfer. This will be detailed in relation to Figure 8.

The test may be done by comparing that the counter of available value units to the sum of the face values of all fractioned banknote pertaining to the electronic wallet. If the difference is greater than the smallest face value of a fractioned banknote, this banknote should be set to empty in step 7.11 and returned to the GSMT system.

In a preferred embodiment, a counter of assigned value units is managed. Each time a fractional transfer is validated in step 7.9, this counter is incremented by the number of value units corresponding to the fractional transfer, for example given by the counter of pending value units. This counter of pending value units is then decremented accordingly. When the counter of assigned value units reaches the face value of a fractioned banknote, this banknote should be set to empty in step 7.11 and returned to the GSMT system. The counter of assigned value units is then decremented accordingly.

If the number of available value units as tested in step 7.2 is not sufficient to handle the fractional transfer, a new banknote needs to be fractioned. In a step 7.3, it is tested if a banknote is available within the electronic wallet to be fractioned. In the preferred embodiment, only banknotes with the smallest face value may be fractioned. If such a banknote is not present in the electronic wallet, but only banknotes of greater face values, a change should be operated with the GSMT system to get at least one banknote of the smallest face value. If a banknote suitable to be fractioned cannot be obtained, the transfer is cancelled in a step 7.6.

If a suitable banknote to be fractioned is identified, typically a banknote of the smallest face value in the monetary system, then the banknote is fractioned in a step 7.5. The banknote is tagged as fractioned and the counter of available value unit is incremented of the corresponding number of value units. Next, the management of the fractional transfer may be resumed at step 7.4. Indeed, the number of available value units is now sufficient as the fractional amount is always lower than the smallest face value.

Figure 8 illustrates the steps undertaken by a receiver of a fractional transfer in an embodiment of the invention.

In a step 8.1 the receiver receives a container banknote emitted by the GSMT and related to a fractional transfer, typically from another user. The electronic wallet then asks to the receiver if he accepts the transfer. In case of refusal, the transfer is cancelled.

In the preferred embodiment, container banknotes are not exchanged between users. Actually, a first container banknote is created by the emitter and sent to the GSMT system. The latter creates a second container banknote with the same amount to be sent to the receiver.

In a step 8.2 it is checked if the receiver already owns a fractioned banknote to be used as a recipient for the fractional transfer. If this is the case, then the counter of available value units of the electronic wallet of the receiver is incremented by a number of value units corresponding to the amount of the fractional transfer in a step 8.5. Once the transfer is validated in step 8.6, an acknowledgement is typically sent back to the GSMT system.

If the receiver does not own a fractioned banknote, then in a step 8.3 a request is sent by the electronic wallet to the GSMT system for an empty one. The GSMT system manages a set of empty banknote to be assigned to a user. In fact when an emitter has a banknote which should be set to empty (in step 7.11) it is returned to the GSMT system. This means at the GSMT system level that it is created a set of empty banknote. The GSMT system picks up one of them and assigns it to the receiver. The electronic wallet of the receiver then receives in a step 8.4 the newly assigned empty banknote from the GSMT system. As this banknote is empty, this reception does not change the state of the counter of available value units. The empty banknote is then tagged as fractioned and may be used for the reception of the fractional transfer which may resume to the increment step 8.5. Once the transfer is validated in step 8.6, an acknowledgement is typically sent back to the GSMT system.

Next, in a step 8.7, if the counter of available value units gets greater than the face value of a fractioned banknote belonging to the electronic wallet, then the fractioned banknote is set to plain in a step 8.8. The counter of available value units is decremented by the number of value units corresponding to the banknote being set to plain. The fractioned banknote is then restored as a plain banknote that could be used for transfer in the electronic wallet.

From the GSMT system point of view, the transfer is handled essentially as a regular transfer of plain banknotes. In addition, the state of container banknotes should be verified. In particular the coherency of the container banknote with the counters of value units, available, pending and to be assigned, may be implemented. To this effect, this information is added in the data structure representing a container banknote. When the GSMT system receives an empty banknote it is added to the set of empty banknotes to be assigned as a technical instrument waiting to be assigned. When the GSMT system receives a request for an empty banknote, it picks up on in the set and assigns it to the requester. This empty banknote is filed with the security information related to the requester.

From a security point of view, in a particular embodiment, in order to avoid attempts to get some empty banknotes in absence of value units to assign or the use of factice container banknotes, empty banknote request and container banknotes may be provided with token linked to the user. These token are stored in a private zone of the electronic wallet, typically in a smartcard or a SIM card. They may be renewed regularly. As several fractional transfers may be hold in parallel, several tokens may be handled in the private zone. This number is kept small for security reasons. On the contrary, only one token is used for empty banknote request as only one request may be done at one time considering that the GSMT system is always available to respond to such a request.

An issue may be a counterfeiter of SIM card being registered as GSMT user and thus having a "genuine" SIM card and having understood the behaviour of counters. This kind of users may realize a system able to manipulate counters of value units to assign in order to trigger automatic requests of empty banknotes to be assigned. These empty banknotes would then be made plain banknotes by virtue of the manipulated counter of value units to assign leading to a fraudulent money creation in favour of the user.

To prevent this kind of scenario, the token used for empty banknote request being unique, the system handles the validity of the token in the following way. When a container banknote is addressed to the user, the token for empty banknote request is set to valid. When a request for an empty banknote is made, the token is set to invalid. Therefore, only the actual reception of a container banknote may validate the token for a request of an empty banknote.

In addition, it is possible to validate the requests of empty banknote by counting the value units received by the user between two requests in order to check that requests are legitimate.

This technical solution allows the manipulation of any amount of money just using electronic banknotes corresponding to the paper ones used in the monetary system. This solution does not need the implication of some third party authority to handle user accounts for transactions.

The man machine interface of the electronic wallet needs to be adapted to handle the invention. In particular, the actual value of the wallet should only take into account the value of the plain banknotes along with the number of available value units.

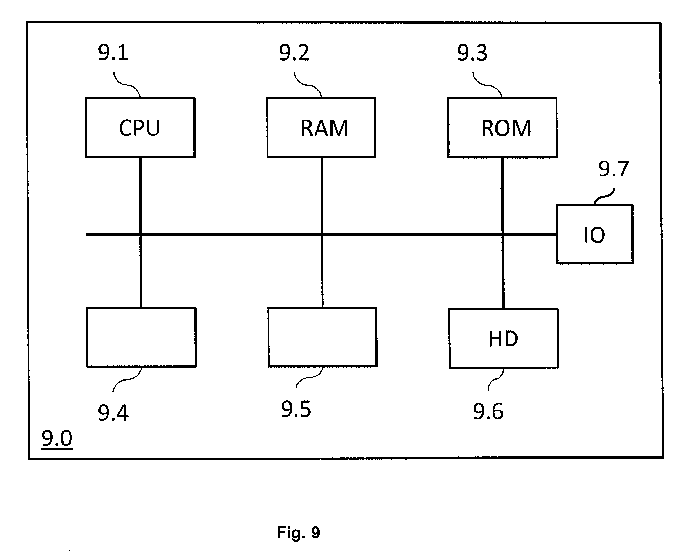

Figure 9 is a schematic block diagram of a computing device 9.0 for implementation of one or more embodiments of the invention, typically the device handling the virtual wallet. The computing device 9.0 may be a device such as a micro-computer, a workstation or a light portable device. The computing device 9.0 comprises a communication bus connected to:
- a central processing unit 9.1, such as a microprocessor, denoted CPU;
- a random access memory 9.2, denoted RAM, for storing the executable code of the method of embodiments of the invention as well as the registers adapted to record variables and parameters necessary for implementing the method for encoding or decoding at least part of an image according to embodiments of the invention, the memory capacity thereof can be expanded by an optional RAM connected to an expansion port for example;
- a read only memory 9.3, denoted ROM, for storing computer programs for implementing embodiments of the invention;
- a network interface 9.4 is typically connected to a communication network over which digital data to be processed are transmitted or received. The network interface 9.4 can be a single network interface, or composed of a set of different network interfaces (for instance wired and wireless interfaces, or different kinds of wired or wireless interfaces). Data packets are written to the network interface for transmission or are read from the network interface for reception under the control of the software application running in the CPU 9.1;
- a user interface 9.5 may be used for receiving inputs from a user or to display information to a user;
- a hard disk 9.6 denoted HD may be provided as a mass storage device, alternatively, the mass storage may be constituted of flash memory;
- an I/O module 9.7 may be used for receiving/sending data from/to external devices such as a video source or display.

The executable code may be stored either in read only memory 9.3, on the hard disk 9.6 or on a removable digital medium such as for example a disk. According to a variant, the executable code of the programs can be received by means of a communication network, via the network interface 9.4, in order to be stored in one of the storage means of the communication device 9.0, such as the hard disk 9.6, before being executed.

The central processing unit 9.1 is adapted to control and direct the execution of the instructions or portions of software code of the program or programs according to embodiments of the invention, which instructions are stored in one of the aforementioned storage means. After powering on, the CPU 9.1 is capable of executing instructions from main RAM memory 9.2 relating to a software application after those instructions have been loaded from the program ROM 9.3 or the hard-disc (HD) 9.6 for example. Such a software application, when executed by the CPU 9.1, causes the steps of the flowcharts shown in Figures 7 to 8 to be performed.

Any step of the algorithm shown in Figure 7 to 8 may be implemented in software by execution of a set of instructions or program by a programmable computing machine, such as a PC ("Personal Computer"), a DSP ("Digital Signal Processor") or a microcontroller; or else implemented in hardware by a machine or a dedicated component, such as an FPGA ("Field-Programmable Gate Array") or an ASIC ("Application-Specific Integrated Circuit").

Although the present invention has been described hereinabove with reference to specific embodiments, the present invention is not limited to the specific embodiments, and modifications will be apparent to a skilled person in the art which lie within the scope of the present invention.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used.

## Claims

1. An electronic wallet for the management of data structures representing electronic banknotes with a face value corresponding to predetermined face values in use in a monetary system, said electronic wallet comprising:
- means to tag an electronic banknote as fractioned, meaning that this banknote cannot be exchanged anymore;
- a counter of available value units corresponding to the face value of the fractioned banknotes, these value units may then be used in money transfers;
- means to return a fractioned banknote to the system as an empty banknote to be assigned to an user when all the value units corresponding to the face value of the banknote have been consumed;
- means to restore a fractioned banknote as a plain banknote when said counter of available value units exceeds or equals the face value of said fractioned banknote.

2. The electronic wallet of claim 1 further comprising:
- means to create a container banknote to be used for the transfer of an amount of money lower than the smallest face value of an electronic banknote.

3. The electronic wallet according to claim 1 or 2, further comprising:
- a counter of value units to assign handling the number of value units already consumed by the electronic wallet.

4. The electronic wallet according to any one claim 1 to 3, further comprising:
- a counter of pending value units handling the number of value units already engaged in a transfer of money before said transfer is completed.

5. A method for transferring an amount of money using electronic banknotes, the amount of money being lower than the smallest face value of a banknote in the monetary system, **characterized in that** it comprises by a mobile device handling an electronic wallet according to any one claim 1 to 4 for the emitter of the transfer:
- checking if the number of available value units according to a counter of available units managed by the electronic wallet of the emitter is greater or equal to the amount of money to be transferred, said counter being associated to at least one banknote in the electronic wallet tagged as fractioned;
- decrementing the counter of available value units by a number of value units corresponding to the amount of money to be transferred;
- sending a container banknote corresponding to the amount of money to a central server managing the electronic money system;
- receiving an acknowledgement of the transaction from the central server;
- validating the transaction.

6. The method of claim 5 further comprising if the number of available value units according to the counter of available units is lower than the amount of money to be transferred:
- if a banknote not tagged as fractioned is available in the electronic wallet:
o tagging said banknote as fractioned;
o incrementing the counter of available units by a number of value units corresponding to the face value of said banknote;
- if a banknote not tagged as fractioned is not available in the electronic wallet:
o cancelling the transfer.

7. The method of claim 5 or 6, further comprising if no acknowledgement is received:
- incrementing the counter of available value units by a number of value units corresponding to the amount of money to be transferred;
- cancelling the transfer.

8. The method according to anyone claim 5 to 7, further comprising after the validation of the transfer:
- testing if a complete fractioned banknote has been consumed in different fractional transfers;
if this is the case:
- returning said fractioned banknote to the system as en empty banknote to be assigned.

9. The method according to claim 8 using an electronic wallet according to claim 3 wherein:
- validating the transfer comprises incrementing the counter of value units to be assigned by a number of value units corresponding to the amount of money transferred; and
- testing if a complete fractioned banknote has been consumed comprises testing if the counter of value units to be assigned has reached the face value of a fractioned banknote; and
- returning said fractioned banknote comprises decrementing the counter of value units to be assigned by a number of value units corresponding to the face value of the returned banknote.

10. A method for transferring an amount of money using electronic banknotes, the amount of money being lower than the smallest face value of a banknote in the monetary system, **characterized in that** it comprises by a mobile device handling an electronic wallet according to any one claim 1 to 4 for the receiver of the transfer:
- receiving a container banknote corresponding to the amount of money from a central server managing the electronic money system; and
- checking that the electronic wallet contains a fractioned banknote; and
- incrementing the counter of available value units by a number of value units corresponding to the amount of money to be transferred; and
- validating the transfer.

11. The method of claim 10 further comprising if the electronic wallet does not contain a fractioned banknote:
- sending a request to the system for an empty fractioned banknote; and
- receiving from the system an empty fractioned banknote assigned to the user of the electronic wallet.

12. The method according to claim 10 or 11 further comprising:
- testing if the counter of available units reaches the face value of a fractioned banknote;
- restoring the fractioned banknote as a plain banknote in the electronic wallet.

13. A computer program product for a programmable apparatus, the computer program product comprising a sequence of instructions for implementing a method according to any one of claims 5 to 12, when loaded into and executed by the programmable apparatus.

14. A computer-readable storage medium storing instructions of a computer program for implementing a method according to any one of claims 5 to 12.
